# EUROPEAN PATENT APPLICATION

(11) **EP 2 068 555 A1**
(43) Date of publication of application: **10.06.2009**
(21) Application number: 07023549.4
(22) Date of filing: 05.12.2007
(51) Int. Cl.: H04N 5/44, H04N 7/173

(54) **Television program broadcasting system, and method**

(71) Applicant: Koninklijke KPN N.V., 2516 CK The Hague (NL)
(72) Inventor: van de Leur, Jerry, 2804 LP Gouda (NL); van Steenbergen, Ate Sander, 9737 NN Groningen (NL)
(74) Representative: Wuyts, Koenraad Maria

(57) **Abstract**

Television program broadcasting system, comprising:
-a television program broadcasting network (Nt);
-at least one broadcast system (1), configured to broadcast television programs via a plurality of network channels;
-a television receiver (10), configured to receive television programs that are broadcast via the television program broadcasting network (Nt);
-a data network (Nd);
-a presence server (20), configured to provide the data network (Nd) with television channel presence information associated with the network channels; and
-a presence client (11), configured to receive the presence information, provided by the presence server (20), via the data network (Nd);

wherein the presence client (11) and television receiver (10) are associated with one another such that the television receiver (10) is controllable via the presence client (11).
The invention also provides a television broadcasting method.

## Description

### FIELD

The invention relates to a television program broadcasting system, parts thereof, and a method.

### BACKGROUND

A television broadcasting system (or "broadcast television system") as such is commonly known and includes broadcasting means to broadcast television programs to television receivers, via television channels of a television broadcasting network.

The system includes broadcast systems, configured to broadcast television programs via respective network channels associated with the television program broadcasting network. For example, television channels can include television channels aimed at a local, regional or worldwide audience, news channels, sports channels, film channels, and other types of television channels.

The known system includes one-way and two-way communication means configured to broadcast television programs in both analogue and digital format utilizing various communication means, for example radiofrequency transmission (terrestrial, DBV-T), wired transmission (cable television), satellite transmission, digital transmission for handhelds (DBV-H), computer networks and/or in a different manner. Particularly, presently, the application of two-way communication means can be a feature in a digital television part of the overall television broadcasting system. A television program broadcasting network can include various television transmission networks, for example one or more radio-networks, cable-networks, satellite communication networks, computer networks, the Internet, and/or other suitable networks. Particularly, Internet is used for transmission of digital IPTV television (IPTV= Internet Protocol Television).

In certain configurations (both analogue and digital), television channels are associated with certain parts of television transmission bands of the transmission network (therein, the band parts can differ regionally for a television channel). In IPTV, transmitted television channels are usually related to multicast IPVT channels that can be viewed using IGMP (the IP Group Membership Protocol), and dedicated unicast channels in case of VOD (Video on Demand) using RTSP (the Real Time Streaming Protocol).

Television receivers (i.e. "television program receivers") can include consumer electronics television sets, mobile or portable television devices, computers and/or mobile phones having television playing capability, television program recording devices, and/or other television receiver devices. A television receiver can be configured to play a received television program, and/or record the program.

End-users of television receivers usually desire to known which program is being transmitted via which television channel. To assist the end-users, various types of television program guides are available, both in paper and digital form. Paper program guides can only offer a limited amount of information concerning a limit number of television channels. The user can not set the content of the paper guide to his personal interests. Some known digital guides (for example the Guide+® system) do allow a user to control the guide, for example such that the guide only offers information concerning personal fields of interest (for example sports, culture, movies) or channels. The known system is only updated once a day, under specific technical circumstances (the receiver has to be on stand-by, and has to be tuned to a dedicated guide updating television channel).

### SUMMARY

The present invention aims to provide an improved television broadcasting system and method. Particularly, the invention aims to provide a system and method that are relatively user friendly utilizing efficient means

According to an embodiment, this is achieved by a system according to claim 1. The television program broadcasting system comprises:
- a television program broadcasting network;
- at least one broadcast system, configured to broadcast television programs via a plurality of network channels;
- a television program receiver, configured to receive television programs that are broadcast via the television program broadcasting network;
- a data network;
- a presence server, configured to provide the data network with television channel presence information associated with the network channels; and
- a presence client, configured to receive the presence information, provided by the presence server, via the data network;
wherein the presence client and television receiver are associated with one another such that the television receiver is controllable via the presence client.

In this way, a presence client can be used to control a respective television receiver. Therefore, handling of television broadcasts (particularly by end-users, i.e. viewers) can be simplified and made very user-friendly.

For example, in an embodiment, a user of the presence client can select a number of television channels to be his "buddies", where-after the user can be informed by the client if his television channel buddies are available or not.

Moreover, in case a television channel buddy is indeed available, information concerning the respective television program that is currently broadcast via the channel, can be notified or shown to the user of the presence client, so that the user can decide whether or not he would like to switch his receiver to the respective television channel.

The present invention is advantageous in case of internet television (IPTV) channels. Nowadays, thousands of internet television channels are available. The channels can be received anywhere via Internet, however, most of the channels only broadcast programs during specific local broadcasting periods. By treating the IPTV channels as buddies, presence clients can inform their end-users in an efficient manner of currently available channels having programs that can be viewed (and/or recorded). Also, for example, in case of IPTV, the television channels can be available on the data-network via which the presence information is transmitted. Besides, the present invention is also applicable to television transmission other than IPTV based transmission, for example in case a television program broadcasting network and the data network are different (communication) networks.

A basic idea of the present invention is to provide a television broadcasting network with presence server and presence client functionality,
wherein the client can control the television receiver (for example: the presence client and television receiver can cooperate with each other). Herein, particularly, a television channel can be dealt with as being a "Buddy" that can be present or absent. Presence servers and clients as such are known, for example from Internet instant messaging applications. Until the present invention, no one came up with the idea that a television channel as such can be a true presence buddy, particularly to provide knowledge about the presence of the channel, a program that is being currently transmitted via the buddy channel, and control over a television receiver to 'set up communication with the buddy' (i.e., to receive a respective television program via/from the buddy). For example, known presence servers and clients can be reconfigured to provide the system according to the invention. Alternatively, dedicated presence servers and presence clients can be provided to be used in the system according to the invention.

Particularly, the Presence of a television channel (i.e., the channel is presently -i.e. now, currently- broadcasting a television program) can be transmitted from presence server to presence client, and the presence client can take appropriate action to control the television receiver. Preferably, the presence client informs a user thereof, of the Presence of the television channel. Moreover, preferably, once being informed, the user can operate his presence client to control the receiver, for example to switch to the respective channel that is Present (i.e., broadcasting a program), and/or to record the program that is being broadcast via that television channel.

In a further embodiment, the presence client and presence server utilize Instant Messaging and Presence Service (IMPS) standard protocols, for example SIP/SIMPLE (the Session Initiation Protocol, with Instant Messaging and Presence Leveraging Extensions), to communicate the television channel presence information. Also, preferably, said data network is a computer network, more preferably a WAN (Wide Area Network), for example Internet.

For example, the television presence information can include one or more of: metadata relating to the television channel, a broadcast television program, information relating to the content of a broadcast program, channel tuning information, and a message. For example the television presence information can (also) include one or more of the year or date of production or publication of a TV program, information regarding colour and/or resolution of the program (black and white or colour, low definition, medium definition or high definition), a list of names of people involved in/with the program (actors, main characters, director, producer et cetate), start time, duration and/or time to end of the program, and/or other information. For example, channel tuning information can be a network tuning code, network band or network frequency, to which television receivers can be tuned to receive the respective channel, as will be appreciated by the skilled person. In case of IPTV, the channel tuning information can be an URL (Uniform Resource Locator) that is associated with the IPTV transmission.

For example, the presence server can be configured to provide a central buddy group of network channels that can be provided with respective presence information.

According to a further embodiment, the presence client can be configured to provide a local buddy group of network channels. For example, the local buddy group can be a selection of a central buddy group. For example, a local buddy can be a buddy to which a client has subscribed to.

Also, for example, the presence client can comprise a user interface being operable by a user to select a buddy from the local buddy group.

According to a further embodiment, the presence client can be configured to control the television receiver to play and/or record the television channel that has been selected via the user interface.

Also, in an embodiment, the user interface can be configured to present television channel presence information, associated with the network channels of the local buddy group and received via the data network, to a user of the presence client.

Also, the invention provides method to select a television channel, for example utilizing a system according the invention. Preferably, the method comprises:
- broadcasting television programs via a plurality of network channels;
- a data network;
- locally providing a television receiver, configured to receive television programs;
- providing a data network with television channel presence information associated with the network channels;
- locally receiving the presence information via the data network;
wherein the television receiver is controlled to select a television channel, to be shown, based on or utilizing the locally received presence information.

An embodiment provides a television receiver, for example a receiver of the system according to the invention, the receiver being configured to receive television programs that are broadcast via a television program broadcasting network. For example, the receiver can be configured to play and/or store received television programs. The present receiver comprise a presence client, wherein the presence client is configured to define a local television channel buddy group, and comprises a user interface being operable by a user to select a buddy from the local television channel buddy group. The receiver can be configured in various ways, for example being a hardware and/or software based television receiver.

Also, there is provided a buddy presence client, for example the client of the system according to the invention, wherein the buddy presence client is configured to receive television channel presence information, and to control a television receiver to switch channels.

Further, there is provided a presence server of the system according to the invention, wherein the system is configured to provide a data network with television channel presence information associated with the presence of television channels of the television program broadcasting network. The server can be configured in various ways, comprising or consisting server hardware and/or software, as will be appreciated by the skilled person.

Also, there is provided a computer program comprising computer code for performing a method according to the invention when the program is being executed by a computer. For example, an embodiment can provide digital machine readable instructions, particularly software code, configured to cause a system to carry out a method according to the invention when executed by the system, particularly to provide a television program broadcasting system according to the invention. Besides, there can be provided digital machine readable instructions, particularly software code, configured to cause a machine to provide, or function as, a presence client of the system according to the invention. Also, for example, according to an embodiment there can be provided a data carrier carrying these digital machine readable instructions.

Further advantageous embodiments of the invention are described in the dependent claims. These and other aspects of the invention will be apparent from and elucidated with reference to non-limiting embodiments described hereafter, shown in the drawings.

### BRIEF DESCRIPTION OF THE DRAWINGS

Figure 1 schematically depicts a system according to an embodiment of the invention;
Figure 2 schematically depicts a system according to an alternative embodiment of the invention;
Figure 3 depicts an end-user part of a system according to an embodiment of the invention in more detail;
Figure 4 depicts an alternative configuration of an end-user part of the system;
Figure 5 is a chart depicting steps of adding TV channels to buddy lists; and
Figure 6 is a chart depicting operation of an embodiment of the invention.

### DETAILED DESCRIPTION

Similar or corresponding features are denoted by similar or corresponding reference signs in the present patent application.

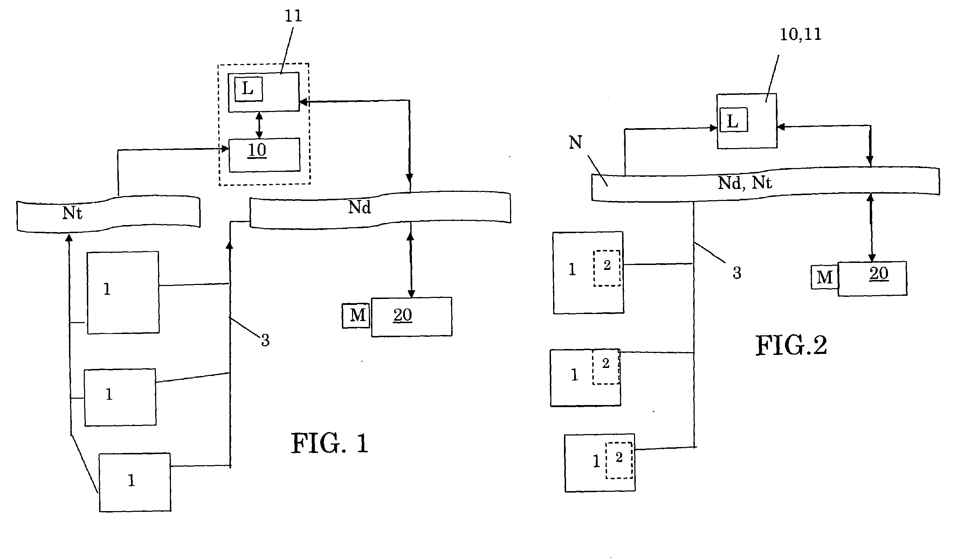

Figure 1 shows a non-limiting example of an embodiment of a television program broadcasting system. The system comprises a television program broadcasting network Nt, for example comprising one or more terrestrial networks, cable television transmission networks, satellite networks, and/or computer networks. The network Nt can be configured to broadcast digital and/or analogue television program containing signals to end-users, and is commonly known as such. A respective broadcast television program containing signal of a channel can include both the audio and video of the program, and can also be provided, for example, with additional data, for example teletext data.

Also, the system comprises a number of television program broadcast systems 1 (only three shown). Each broadcast system 1 (i.e. television service 1) is configured to broadcast television programs via one or more respective television network channels of the network Nt to end-user receivers 10. A broadcast system 1 can be associated with a single network channel, or with a plurality of different respective network channels.

For example, television channels (provided by the respective broadcast systems) can include network channels aimed at or relating to a local, regional or worldwide audiences, news channels, sports channels, film channels, music, children, and other types of television channels. Each broadcast system 1 can transmit programs around the clock via a respective television network channel, or only during certain desired broadcasting periods.

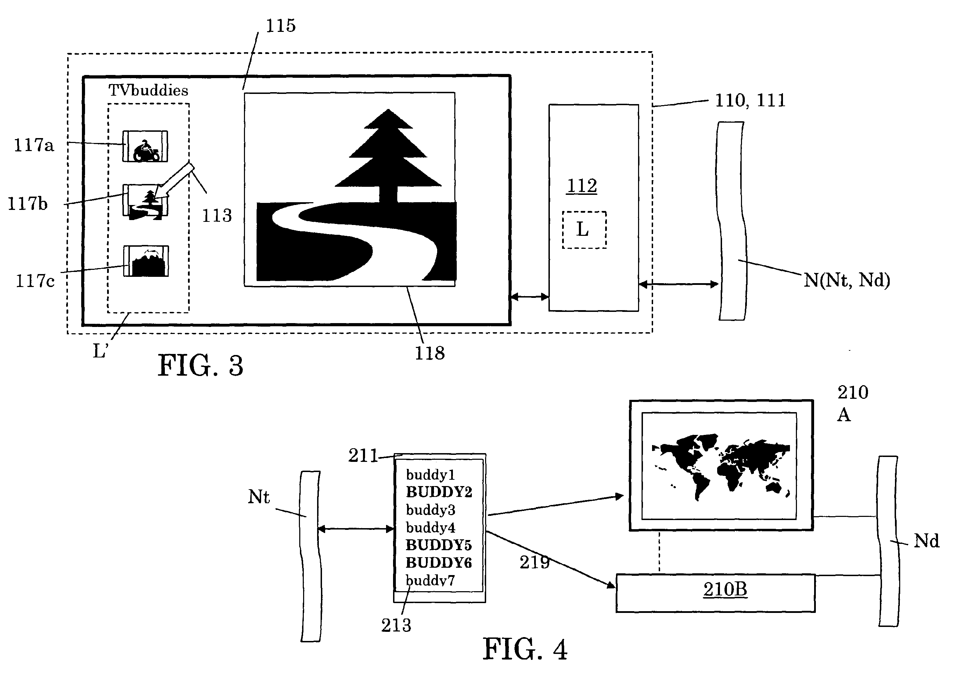

Besides, the system includes a number of end-user television receivers 10 (only one being shown), each receiver 10 being configured to receive television programs that are broadcast via the television program broadcasting network Nt. More detailed examples 110, 210 of receivers are shown in Figures 3-4. For example, the receiver 1 can be one or more of: a television set, a portable device, a set-top box, mediaplayer, a computer, a mobile phone, a personal digital assistant, a television program recorder. According to an embodiment, a receiver 1 can be configured to play a television program, received via a television channel of the network Nt, on a respective display device (see figures 3, 4). Besides, a receiver can be configured to store a received television program, for example digitally or analogue, for example onto an information carrier, magnetic tape, optically writable video disk (DVD), a magnetically writable disk (a hard disk), in a digital memory, or in a different manner.

According to a further embodiment, there is provided a data network. The embodiment of Fig.1 comprises a data network Nd that is separate from the television program broadcasting network Nt. For example, the data network Nd can be a computer network, for example a WAN (particularly Internet), and particularly being configured to provide data communication using a computer network communication protocol (for example the Internet Protocol, IP).

Fig. 2 shows an alternative embodiment, wherein the data network Nd and television network Nt are provided by the same computer network N, for example Internet. In this case, for example, television programs are broadcast to end-users using IPTV (Internet Protocol Television) over the network N.

Besides, in the case of IPTV broadcasts, a channel can be a multicast channel, for example configured to continuously transmit streaming television to a multiple viewers. Also, a channel can be a unicast channel, for example in the case of a video-on-demand television channel.

In the present embodiments, the television program broadcast systems 1 are connected to the data network Nd, for example via suitable data communication means, communication interfaces, communication lines 3, as will be appreciated by the skilled person.

### Buddy television channel presence information

Preferably, television channels as such are being associated with respective "buddies", as part of a buddy presence information transmission system and method, as will be explained in the following. Particularly, end-users can add and remove television channels to/from local personal buddy lists L, and can control local television receivers 10 (for example to switch channels) by interaction with local presence clients 11 (i.e. receiver associated clients 11) that manage the local buddy lists L.

For example, at least one presence server 20 can be provided, which server is connected to the data network Nd (see the drawing) to provide data communication between the presence server 20 and remote systems/devices 1, 10.

Also, the system is provided with a number of presence clients 11 (one shown), each being configured to receive (for example to read) the television channel "buddy" presence information, provided by the presence server 20, from/via the data network. Moreover, particularly, a presence client 11 and television receiver 10 can be associated with one another such that the television receiver 10 is controllable via the presence client 11.

According to an embodiment, the presence server 20 is configured to centrally maintain a group (for example a list) of buddy status for all buddies, the status particularly being or including the actual presence status of the respective buddy.

For example, each presence server 20 (only one being shown) can be configured to provide the data network Nd with buddy presence information. For example, the presence information can be information of, or concerning, the actual, current, presence of a buddy. The information can be a predetermined message, for example "Present" in case a buddy is present, and a different message (or no message at all) in case a buddy is not present. Besides, the presence information held and/or controlled by the presence server 20 can include metadata relating to the buddy, for example information concerning an identity and/or location of the buddy.

According to a further embodiment, a particular buddy (for example "Buddy1") is associated with a particular television channel (for example "Channel-1"). In that case, a presence information message such as "Buddy 1 Present" can mean that a broadcast system 1 is broadcasting a television program via that channel (Channel-1). A different presence information message (or no message at all) can be provided in case the broadcast system 1 is not broadcasting any program via that television channel.

In a further embodiment, the television channel presence information can be television program presence information associated with the presence of television programs on channels of the television channel broadcasting network.

Also, for example, the television channel presence information can include one or more of: a (real-time, actual) broadcast television program, information relating to the content of a broadcast program, and/or a message.

The drawing only shows one (local) presence client 11, however, the system preferably contains a plurality of presence clients 11 (associated with a plurality of respective receivers 10). The presence server 20 can also be configured to provide presence information concerning the presence of other participants than television channels, for example the presence each of the presence clients 11 as such. Then, in an embodiment, the depicted local presence client 11 can be configured to cooperate with the presence server 20, to inform a respective user (of client 11) of the presence status of remote presence clients (for example relating to other end-users) as well.

According to a further embodiment, the presence server 20 is configured to provide (i.e. to determine, to handle) and/or operate with a central buddy group M (for example a list) relating to network channels that can be provided with respective buddy presence information. For example, the server 20 can include or be operatively connected to a memory to store the central buddy group M. Particularly, the buddy group M consists of buddy identifiers (for example names, addresses, identification codes, channel frequency, URL) of buddy television channels, to be selected by end-users via their presence clients (see below).

In a further embodiment, the presence server 20 can also be configured to provide (i.e. to determine, to handle) a central buddy group (for example a list) relating to the presence of other buddies (for example end-users or end-user presence clients 11 as such). The above-mentioned central buddy group M that includes television channel buddies can, for example, also include presence information concerning the other buddy types (for example end-users). For example, presence server 20 can be configured to handle television channel buddies in the same way as other types of buddies (such as optional end-user buddies).

Preferably, each broadcast system 1 and the presence server 20 are configured to cooperate to provide the presence server 20 with (preferably real time) presence information relating to the channels, and for example to actual, currently (real-time) broadcast television programs. In an embodiment, a broadcast system 1 can be configured to automatically generate or change the presence information of a respective television channel, depending on the presence of that channel (i.e., whether or not a program is being broadcast on the channel) and transmit the information to the server 20 via the network Nd. For example, the presence server 20 can be configured to communicate with the (for example remote) television broadcast systems 1, for example via the data network Nd, to receive the television channel presence information there-from (preferably using the SIP/SIMPLE protocol).

Preferably, the cooperation between broadcast system 1 and the presence server 20 is such, that a changed presence of a buddy television channel is automatically, instantaneously signaled to the central presence server 20, which in turn can automatically, instantaneously, signal the changed presence to local end-user presence clients 11 via the data network Nd.

For example (see Fig. 2), a television broadcast system 1 as such can (but not necessarily) include a respective television channel presence client 2 (i.e. a channel associated client 2) to communicate with the presence server (over a data network Nd). Alternatively, for example, a television channel presence client 2 can be separate from a respective television broadcasting system 1.

Each channel presence client 2 can provide the data network Nd with respective buddy presence information, to be received by the central presence server 20. The television broadcast system 1 can be configured to automatically set a channel buddy status provided by the respective channel presence client 2, depending on actual channel broadcasts. For example, television broadcast system 1 can be configured to set the buddy status of the respective channel presence client 2 to "Present" only in the case the system 1 is broadcasting via that channel. The buddy status can also include information concerning the program that is being broadcast via the channel. In case there is no transmission, the status can be "not present". For example, each television channel presence client 2 can be configured to transmit metadata relating to the presence of the channel and the television program that is being broadcast by the channel, particularly to drive or adjust the channel presence information in the presence server 20. Preferably, said metadata includes at least channel tuning information that can be used by television receivers 10 to tune to the respective channel. The metadata can also include various other types of information, as has been mentioned above.

According to a preferred embodiment, abovementioned presence information(preferably including channel tuning information) can be transmitted over the data network utilizing IMPS (Instant Messaging and Presence Service) standard protocols, for example the SIP/SIMPLE protocol, or a different type of protocol. For example, the presence communication protocol can be configured to transmit presence information, as well as streaming video, for example a (real-time) transmitted television program which is being transmitted over the television network Nt, over a present/active channel, by a broadcast system 1. According to a further embodiment, during operation, the central television program presence server 20 and local presence clients 11 communicate via the data network Nd using the IMPS protocol (for example SIP/SIMPLE), to provide television program presence information to users of the presence clients, and preferably to provide the presence clients 11 with said channel tuning information. Also, preferably, during operation, the television broadcast system(s) 1 the presence server 2 communicate (via the data network Nd) using the IMPS protocol.

### Local client-receiver system

Figure 1 shows an example, wherein the television receiver 10 and presence client 11 are spatially associated with each other. A similar embodiment is depicted in Fig. 4. Figures 2 and 3 show embodiments, wherein client 11, 111 and receiver 10, 110 are integrated with each other. In each case, for example, the presence client 11 can be provided by a software application, or be embedded in hardware. For example, the integral presence client and receiver 110, 111 can be different modules or functions of the same local system or software appliance.

Preferably, each presence client 11 is configured to provide a local buddy group L of (buddy) network channels. The local buddy group L can be a user selection of an above-mentioned central buddy group M, and can be stored in a suitable memory of the presence client 11. For example, a user can operate a respective client 11 to add one or more buddy channels to his/her local personal group L (i.e. to 'subscribe' to those channels), and to remove undesired channels from the local group L. Also, preferably, there is provided a user interface, configured to present television program presence information, associated with the network channels of the local buddy group and received via the data network Nd, to a user of the presence client. According to yet a further embodiment, a local end-user presence client 11 can be configured to be operated by different end users, and can provide different local buddy groups L to be used by those end-users.

For example (see Fig. 3), a local end-user system 110, 111 can include a display 115 and a processing unit 112 (for example a computer system), connected to the computer network N. The processing unit 112 is configured to control the display 115, to show IPTV programs received via the network N (for example in a TV-window part 118 on the display 115). For example, the processing unit 112 can include TV-player functionality, for example TV codecs and/or is configured to utilize one or more TV channel selection protocols (for example IGMP).

Also, the processing unit is configured to act as an above-described local buddy presence client 111, for example to manage a local buddy group L. The local system 110, 111 comprises a user interface being operable by a user to select a buddy from the local buddy group L. For example, the display can be or be part of the user interface. For example, in an embodiment, a user can operate the user interface to move a pointer 113 on the display 115. Alternatively, the display can be a touch screen 115, operable by touching the screen. The user interface of the local system can also be configured differently, a will be appreciated by the skilled person.

The user interface can be controlled by the presence client 111. For example the processing unit 112 (i.e. presence client 111) can receive presence information from the network N, and display a list L' of television channel buddies (TVbuddies) on the display 115. The processing unit 112 can be configured to display only those TVbuddies that are present according to their respective presence information (received via the data network). Thus, all channels that are not present (i.e., according to or following from information received from the presence server 20) are not included in the list L' displayed on the screen 115. In this embodiment, the present buddy television channels are depicted on the display 115 by respective icons or small video sections 117a, 117b, 117c. Preferably, the presence client 111 can also receive channel tuning information relating to TV buddy channels (from the presence server 20).

For example, the icons or video sections 117a, 117b, 117c can each display metadata relating to the program that is broadcast at the present moment, received from the network N as part of channel presence information. The end-user of the local system 110, 111 can operate the user interface to select the buddy channel 117a, 117b, 117c to be shown in the window 118 (for example by pointing the pointer to the respective icons or video sections 117a, 117b, 117c, or pressing on the icon or video section in case of a touch screen). The system 110, 111 can be configured such, that once the user has selected one of the buddy channels 117a, 117b, 117c, the selected channel is shown in the window 118. Therein, for example, the presence client 111 controls the respective TV receiver part/module 110 to switch to the selected channel, for example by (internally) transmitting a control message (for example including said channel tuning information) to the receiver 110.

Thus, as follows from the above, the presence client 111 determines the configuration of its user interface L', i.e., a list of selectable channels 117a, 117b, 117c in the present embodiment, and therefore controls (affects) channel selection. As a result, the end user can control the television receiver via the presence client (particularly via a user interface that is controlled/configured by the presence client.

In an alternative embodiment, the user can operate the presence client/television receiver system 110, 110 to record a program from a buddy television channel; to that aim, for example, the processing unit 112 can be provided with a suitable recorder (not shown as such in Fig. 3).

The embodiment of Figure 4 differs from that of Fig. 3, in that the local presence client 211 and television receiver 210 are different appliances. For example, the end-user television channel presence client 211 can be configured to communicate with one or more receivers 210A, 210B using remote control (indicated by arrows 219), for example via optical and/or radiofrequency signals or in a different remote controlling manner. Particularly, the client 211 includes a user interface 213, for example having a controllable display. For example, a receiver can include a consumer electronics television set 210A, and/or a television program recorder 210B. Each receiver 210A, 210B can be connected to a television network Nt to receive television channels. The respective presence client 211 is communicatively connected to the data network Nd, to receive buddy presence information. Also, in this case, the presence client 211 can be configured to control television receivers 210A to play and/or record a buddy television channel selected on the client 211.

In the embodiment of Fig. 4, the user interface 213 of the presence client 211 is configured to display a list (for example of names or identifiers) of all television channel buddies (buddy1, buddy2, ....., buddy7), being 'subscribed to' (i.e. added) by a respective user to his local list L. For example, based on the information received (from a remote presence server 20, see Fig. 1-2) via the data network Nd, the presence client 211 highlights (for example using bold and/or capital highlighting, or differently) all television channels that are found to be present. The client 211 is operable by a respective user, to select a highlighted buddy channel. Once a channel has been selected, the client 211 can take action (via a respective user interface) to control a television receiver 210A, 210B, for example to switch to the respective television channel to play or record a broadcast program. Also in this case, the action can include transmission of a suitable control message (for example including said channel tuning information) from the client 211 to the receiver 210.

### Operation

Use of the systems, shown in Figures 1-4, can include a method to select a television channel, comprising:
- broadcasting television programs via a plurality of network channels, via a television network Nt;
- locally providing television receivers 10, configured to receive television programs;
- providing the data network Nd with ("buddy") television channel presence information associated with the presence of television programs on channels of the television channel broadcasting network.

Therein, preferably, buddy channel presence information is kept up-to-date real time, that is, any alteration of the presence of a buddy television channel (for example from inactive to active, and vice-versa) is automatically and substantially immediately updated in a central buddy group M of the presence server 20, to be automatically, preferably immediately, updated in remote local client buddy groups L of active (i.e. running, operating) presence clients 11.

The end-user presence clients 11 can locally receive the television program presence information via the data network Nd. The respective television receiver 10 can then be controlled to select a television channel, to be shown/played, based on or utilizing the locally received television program presence information. For example, a user can operate an above-mentioned user interface to select a buddy from a local buddy group L. The selecting of the buddy preferably automatically controls the television receiver 10, via the local presence client 11, to play and/or record the respective television channel.

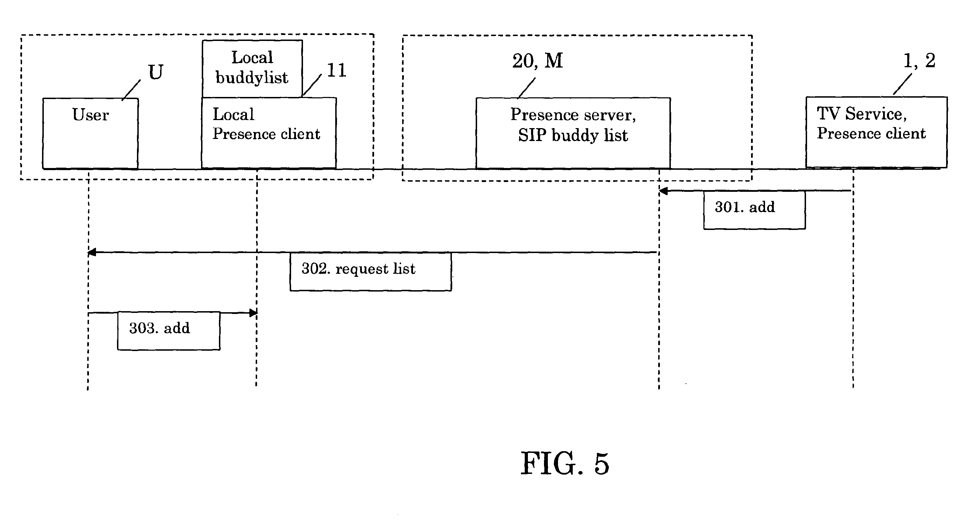

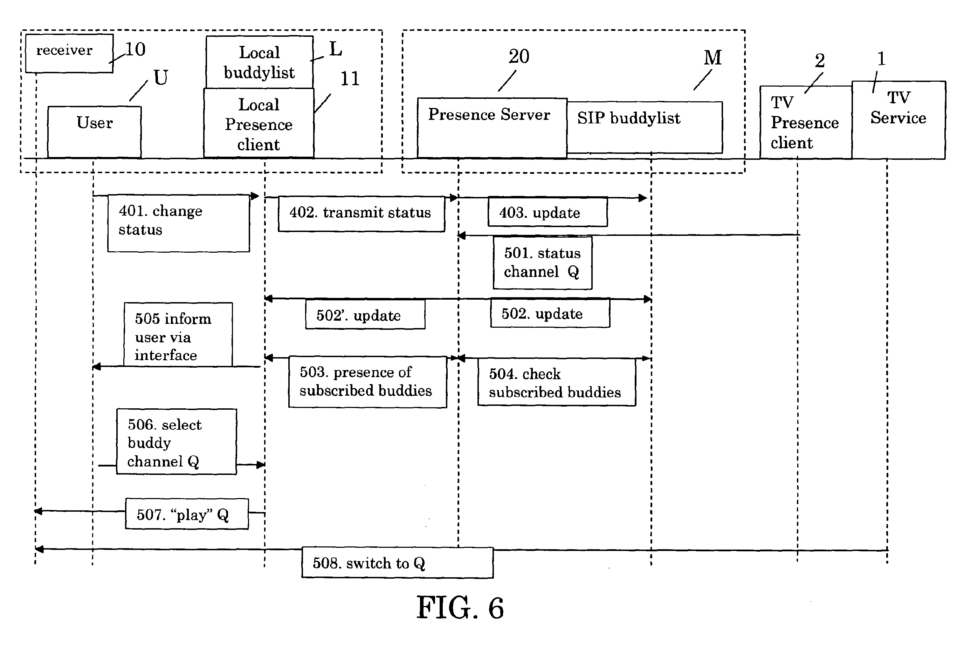

Figures 5 and 6 show further detailed parts of embodiments of the method. The drawings particularly refer to a combination of TV and SIP/SIMPLE functionality, however, also other types of presence communication protocols (instead of SIP/SIMPLE) can be applied.

According to an embodiment, for example, a central buddy group M can contain SIP buddy identifiers (for example names, addresses, identification codes) of buddy television channels, and optionally also other SIP buddy identifiers (for example relating to end-users U). The presence server 20 can manage the presence information relating to each of the buddies of the central buddy group M.

The skilled person will appreciate that creating buddy accounts, subscribing and unsubscribing (adding and removing) to/from buddies, publishing presence and notifying of changed presence, can be carried out in various different ways. As a non-limiting example, figure 5 depicts several steps to add buddies to a buddy lists M, L for example a SIP type buddy lists M, L. In a first step 301, one or more television services (for example television broadcasting systems 1) can add one or more respective television channels to the central (for example presence server 20 controlled) SIP platform buddy list M. In a second step 302, a local presence client 11 of a user U can receive all available buddies (or part thereof) from the central buddy list M, for example upon request via the data network. Then, the user U can operate his presence client 11 to select desired buddy channels from the received list, and add the selected channels to his local personal User buddy list L (that is controlled or managed by the respective local presence client 11) to subscribe to those channels. Thus, a user U can build his personal television channel buddy list L, based on personal interests.

Figure 6 depicts a non-limiting embodiment of operation, for example after a user U has controlled his presence client 11 to add desired television channels to the local buddy list L. The steps 401-403, 501-507 can be carried out in a different order than the one depicted, as will be appreciated by the skilled person. Also, for simplicity, optional steps such as removing buddies from buddylists, and television channel buddies becoming inactive (for example leading to a cancelling of their presence), are not indicated.

In an embodiment, the user U can change the presence status of him/herself (see step 401), for example by controlling a respective personal client 11 (i.e. a respective local presence client) to communicate with the presence server 20 (via data network Nd) to set a user buddy presence (to "Present") in the central SIP buddy list. Also, the user U can control his client 11 to chance the client presence status for example to "away", "absent", "offline", "online", or other status types, as will be appreciated by the skilled person. The personal client 11 then transmits the new status to the presence server (step 402), and the presence server updates a respective client presence list M (step 403).

In a step 501, the television service 1 can start transmitting via a channel Q. The TV service sends respective presence information to the presence server 20 that channel Q is available, and the presence server updates the respective channel buddy status in the SIP buddylist (step 502). Alternatively, or in addition, for example, the presence server 20 sends updates of the respective channel buddy status automatically to remote presence clients 11, 111, 211 preferably automatically, and particularly to clients that have subscribed to the respective TV channel buddy). This is indicated by step 502'.

Besides, as part of step 501, the television service 1 can generate and transmit metadata (for example being part of the television presence information, and preferably including channel tuning information) relating to the broadcasting channel Q over the data network Nd to the presence server 20. The metadata can include information relating to the content of the television program that is actually being transmitted. The metadata can (also) include channel tuning information of the television channel, which tuning information can be used by personal clients 11 (and their respective TV receivers 10) to tune respective television receivers to the respective television channel. For example, the presence server 20 can send the metadata to remote presence clients 11, 111, 211 as well (preferably automatically, and particularly to clients that have subscribed to the respective TV channel buddy relating to that metadata).

As a non-limiting example, in a step 503, a local personal client 11 and presence server 20 automatically communicate (for the SIP/SIMPLE protocol) for updating the client 11, such that the client 11 receives presence information (including for example above-mentioned channel metadata) from the presence server 20, concerning the presence of all subscribed buddies (i.e., all buddies that are enlisted in the respective local buddy list L). This can be achieved in various ways.

For example, optionally, in an embodiment, the presence server 20 can retrieve the desired information, concerning the presence of all subscribed buddies, from the central buddylist M (step 504) in case such information is stored in that list M.

Alternatively, the presence server 20 does not retrieve the desired information, concerning the presence of subscribed buddies, from a central buddylist; for example, the server 20 can already be provided with that information (for example, when the server 20 has just received that information from the TV presence client 2), or requests the TV presence client 2 to transmit that information.

Then, the local client 11 can inform a respective user U, via the user interface, of the presence of subscribed buddies (step 505, see also Fig. 3, 4 as an example). Preferably, during operation, each change of buddy presence information in the central SIP list M is automatically transmitted to personal clients 11 that are subscribed to the respective buddy (i.e., the buddy presence information is being updated automatically, by the SIP/SIMPE protocol).

Step 506 indicates a user selecting a television channel (for example a channel Q) using the user interface. For example, as has been described above, the user U can operate a respective user interface to select an active, present, television buddy channel, for example to play the channel, or record the program broadcast on the channel. For example, in a further embodiment, in case the user desires to view the television channel of a buddie (Y) (displayed on the user interface), the user can click on the buddy (Y) using a pointer

A resulting process of playing a selected buddy channel Q is indicated by steps 507, 508. Therein, the local presence client can instruct to respective TV receiver 10, 110, 210 to play the selected buddy channel (step 507). As a result, the receiver will switch to that channel (for example channel Q, see stel 508). For example, in case of IPTV (such as in the Fig. 3 embodiment), an RTSP (Real Time Streaming Protocol) call and -for example-an IGMP call (Internet Group Management Protocol) call can be transmitted by the local receiver over the data network Nd, to set up a TV stream of channel Q to the receiver 110 associated with the client 111, as will be appreciated by the skilled person. For example, in case the metadata includes channel tuning information (for example a tuning code, band, frequency, URL) the personal client 111 can utilize that information to control the receiver 110 to tune to the respective channel. Thus, the receiver 110 as such does not have to be programmed by a user U beforehand with TV channel tuning information, and can be controlled using IMPS protocols to tune to a desired buddy TV channel.

In a further embodiment a step 507 of playing the selected buddy channel can involve certain interaction, communication or cooperation between a local presence client 11, 111, 211 and a respective local receiver 10, 110, 210. For example, after a user has selected a TV buddy Q (i.e. step 506), a local message (for example including metadata, for example an URL of a TV-stream, a frequency of a TV signal, or an IMGP join identifier) can be transmitted from the local presence client 11, 111, 211 to the respective end-user television receivers 10, 110, 210 (for example a TV receiver, streaming client, media player). The transmitting of this message is indicated by step 507 in Fig. 6. After the end-user television receivers 10, 110,210 has received that message, or as a result of receiving that message, the receiver 10, 110,210 can use the content of that message to show the respective TV channel Q (for example by tuning to that channel based on the received message). This is indicated by the step 508 in Fig. 6.

Thus, the receiver 10, 110,210 can be "controllable" by the presence client 11, 111, 211. For example, one or more channel selection commands can be transmitted from/by the presence client 11, 111, 211 to the TV receiver 10, 110, 210 for example a command that includes or relates to said metadata (for example tuning information, for example a channel-identifier, an URL frequency, or IGMP identifier). As is mentioned before, a particular advantage is that the receiver 10, 110, 210 does not have to 'know' the frequency or URL (or other tuning information) of a desired TV channel, in case such information is transmitted to the receiver 10, 110, 210 as a result of the selecting of the respective channel buddy. This is very advantageous in case a very large number (thousands) of TV channels are available. Besides, in this way, end-users (or their TV receivers) do not have to keep track of changes of URLs of multi-cast streaming TV transmissions of TV buddies, in order to view the buddy channels.

The present system and method provide an advantageous means to set up and control the receiving of television programs. For example, television broadcast sessions can be set up automatically and dynamically to end-users U, based on buddy lists and presence information. TV channels can behave as buddies, so that a user-friendly way to 'subscribe' to the channels can be achieved. End-users themselves can determine which television information is to be received, and particularly based on actual presence of the channels. Also, according to a further embodiment, the presence server can be provided with end-user presence information that includes identification of the television channel that the end-user has selected. In this way, for example, a group of end users U can cooperate via respective end-user clients 11 to jointly select the same television channel (for example to watch the same television program at the same time).

The descriptions above are intended to be illustrative, not limiting. Thus, it will be apparent to one skilled in the art that modifications may be made to the invention as described without departing from the scope of the claims set out below.

Also, it is to be understood that in the present application, the term "comprising" does not exclude other elements or steps. Also, each of the terms "a" and "an" does not exclude a plurality. Also, a single processor or other unit, and/or software application or set of machine readable instructions, may fulfil functions of several means recited in the claims. Any reference sign(s) in the claims shall not be construed as limiting the scope of the claims.

For example, besides television program broadcasting, the present system can also be configured to broadcast other types of media, for example multimedia, radio. For example, according to a further embodiment, the television receiver can be configured to utilize one or more mobile communication protocols and/or technologies, for example the Universal Mobile Telecommunications System (UMTS), Wireless Fidelilty (WIFI), Worldwide Interoperability for Microwave Access (WIMAX), Bluetooth^{™}, and/or other protocols and/or technologies.

## Claims

1. Television program broadcasting system, comprising:
- a television program broadcasting network (Nt);
- at least one broadcast system (1), configured to broadcast television programs via a plurality of network channels;
- a television receiver (10), configured to receive television programs that are broadcast via the television program broadcasting network (Nt);
- a data network (Nd);
- a presence server (20), configured to provide the data network (Nd) with television channel presence information associated with the network channels; and
- a presence client (11), configured to receive the presence information, provided by the presence server (20), via the data network (Nd);
wherein the presence client (11) and television receiver (10) are associated with one another such that the television receiver (10) is controllable via the presence client (11).

2. The system according to claim 1, wherein the presence client (11) and the television receiver (10) are spatially associated with each other, and are preferably integrated with each other.

3. The system according to claim 1 or 2, wherein the presence server (20) is configured to provide and/or operate with a central buddy group (M) of network channels that can be provided with respective presence information.

4. The system according to any of the preceding claims, wherein the presence client (11) is configured to provide a local buddy group (L) of network channels.

5. The system according to claim 4, wherein the presence client comprises a user interface (113, 115; 213) being operable by a user to select a buddy from the local buddy group (L).

6. The system according to claim 5, wherein the presence client is configured to control the television receiver to play and/or record the television channel that has been selected via the user interface (113, 115; 213).

7. The system according to claim 4 or 5, wherein the user interface (113, 115; 213) is configured to present presence information, associated with the network channels of the local buddy group and received via the data network (Nd), to a user of the presence client (11).

8. The system according to any of the preceding claims, wherein the presence information includes one or more of: metadata, a broadcast television program, information relating to the content of a broadcast program, channel tuning information, and a message.

9. The system according to any of the preceding claims, wherein the broadcast system (1) and presence server (20) are configured to cooperate to provide the presence server (20) with (real time) presence information relating to broadcast television programs.

10. A method to select a television channel, for example utilizing a system according to any of the preceding claims, the method comprising:
- broadcasting television programs via a plurality of network channels;
- a data network (Nd);
- locally providing a television receiver (10), configured to receive television programs;
- providing a data network (Nd) with presence information associated with the network channels;
- locally receiving the presence information via the data network (Nd);
wherein the television receiver (10) is controlled to select a television channel, based on or utilizing the locally received presence information.

11. The method according to claim 10, comprising:
- locally providing a local buddy group (L) of network channels, and a user operating a user interface to select a buddy from the local buddy group (L),
wherein the selecting of a buddy controls the television receiver (10) to play and/or record the respective television channel.

12. The method according to claim 10 or 11, wherein a central television channel presence server and local presence clients communicate via the data network (Nd) using a IMPS protocol, for example SIP/SIMPLE, to provide television channel presence information to users of the presence clients.

13. A television receiver (10), for example a receiver of the system according to any of claims 1-9, the receiver (10) being configured to receive television programs that are broadcast via network a television program broadcasting network (Nt), wherein the receiver (10) comprises a presence client (11), wherein the presence client (11) is configured to define a local television channel buddy group (L), and comprises a user interface being operable by a user to select a buddy from the local television channel buddy group (L).

14. The receiver according to claim 13, wherein the presence client (11) is configured to control the television receiver (10) to play and/or record a selected buddy television channel.

15. A buddy presence client (11), for example the client of the system according to any of the claims 1-9, configured to receive television channel presence information, and to control a television receiver (10) to switch channels.

16. The presence server (20) of the system according to any of the claims 1-9, configured to provide a data network (Nd) with television channel presence information associated with the television channels.

17. The presence server (20) according to claim 16, configured to communicate with television broadcast systems (1), via the data network (Nd), to receive television channel presence information there-from, and to communicate with remote presence clients, also via the data network (Nd), to transmit television channel presence information to those clients.

18. A computer program comprising computer code for performing a method according to any of the claims 10-12 when the program is being executed by a computer.
